# EUROPEAN PATENT APPLICATION

(11) **EP 3 016 104 A1**
(43) Date of publication of application: **04.05.2016**
(21) Application number: 15192225.9
(22) Date of filing: 29.10.2015
(51) Int. Cl.: G10L 15/22, G10L 13/00

(54) **VOICE INTERACTIVE SYSTEM FOR INDUSTRIAL FIELD INSTRUMENTS AND FIELD OPERATORS**

(30) Priority: 31.10.2014 US 201414530491
(71) Applicant: Honeywell International Inc., Morris Plains, NJ 07950 (US)
(72) Inventor: GANDHI, Amol, Morris Plains, NJ New Jersey 07950 (US); KUMAR, Kolavi Mahadevappa Shashi, Morris Plains, NJ New Jersey 07950 (US)
(74) Representative: Houghton, Mark Phillip

(57) **Abstract**

A device (101) performs a method in an industrial control and automation system (100). The method includes receiving (410) a command audio signal generated by a verbal command, wherein the command audio signal includes one or more instructions. The method also includes transmitting (415) one or more command signals to a controller (106) to implement the one or more instructions. The method further includes receiving (420) one or more update signals from the controller, wherein the one or more update signals are based on at least one of a parameter measured by one or more sensors (102) or a status of one or more actuators (104). The method includes transmitting (425) the one or more update signals for speech output.

## Description

### CROSS-REFERENCE TO RELATED APPLICATION AND PRIORITY CLAIM

This application claims priority under 35 U.S.C. § 119(e) to U.S. Patent Application No. 14/188,419 filed on February 24, 2014, which is hereby incorporated by reference.

### TECHNICAL FIELD

This disclosure relates generally to industrial control and automation systems. More specifically, this disclosure relates to voice interaction with industrial field instruments.

### BACKGROUND

Industrial process control and automation systems are used to automate large and complex industrial processes. These types of control and automation systems routinely include sensors, actuators, and controllers. The controllers typically receive measurements from the sensors and generate control signals for the actuators.

Industry consolidation and worldwide competition are putting today's plants under intense financial pressure, and operations and maintenance budgets are reducing. Fewer personnel, working fewer hours, are expected to operate and maintain more equipment at lower cost, while also delivering higher throughput, higher availability, and higher profits with aging assets. Plants must therefore increase the productivity of their existing maintenance and operations teams, while looking for ways to continue to reduce costs. New techniques to maintain smoother, safer, and cheaper operations can be used to improve the above scenarios.

### SUMMARY

This disclosure provides voice interactive systems for industrial field instruments and field operators.

In a first example, a method includes receiving a command audio signal generated by a verbal command, wherein the command audio signal includes one or more instructions. The method also includes transmitting one or more command signals to a controller to implement the one or more instructions. The method further includes receiving one or more update signals from the controller, wherein the one or more update signals are based on at least one of a parameter measured by one or more sensors or a status of one or more actuators. The method includes transmitting the one or more update signals for speech output.

In a second example, a device includes a voice engine. The voice engine is configured to receive a command audio signal generated by a verbal command. The command audio signal includes one or more instructions. The voice engine is also configured to transmit one or more command signals to a controller to implement one or more instructions. The voice engine is further configured to receive one or more update signals from the controller. The one or more update signals are based on at least one of a parameter measured by one or more sensors or a status of one or more actuators. The voice engine is configured to transmit the one or more update signals for speech output.

In a third example, a non-transitory computer readable medium embodies a computer program. The computer program includes computer readable program code for receiving a command audio signal generated by a verbal command. The command audio signal includes one or more instructions. The computer program also includes computer readable program code for transmitting one or more command signals to a controller to implement one or more instructions. The computer program further includes computer readable program code for receiving one or more update signals from the controller. The one or more update signals are based on at least one of a parameter measured by one or more sensors or a status of one or more actuators. The computer program also includes computer readable program code for transmitting the one or more update signals for speech output.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial control and automation system according to this disclosure;
FIGURE 2 illustrates an example handheld device according to this disclosure;
FIGURE 3 illustrates an example handset device according to this disclosure; and
FIGURE 4 illustrates an example method in a voice engine of a field instrument in an industrial control and automation system according to this disclose.

### DETAILED DESCRIPTION

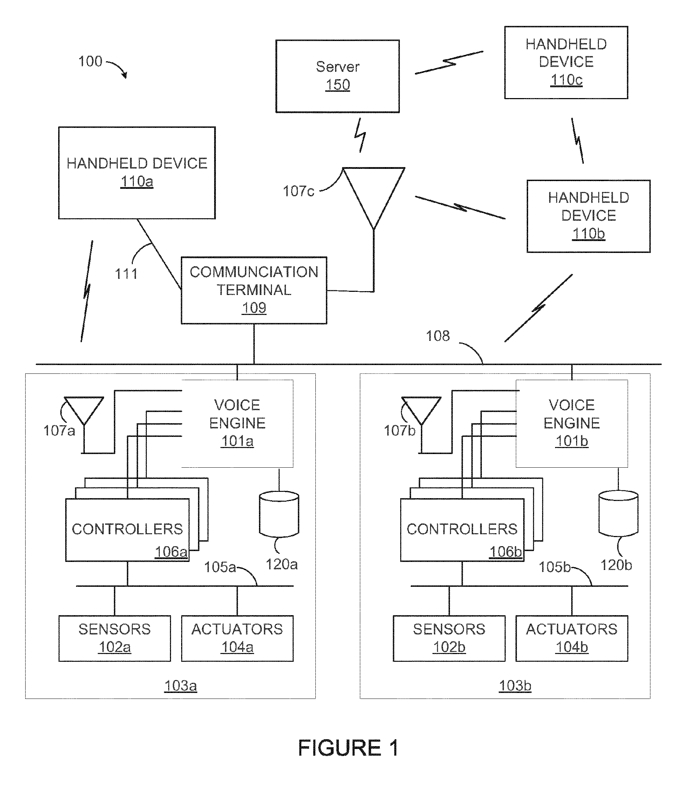

FIGURES 1 through 4, discussed below, and the various embodiments used to describe the principles provided in this patent document are by way of illustration only and should not be construed in any way to limit the scope of the concepts provided herein. Those skilled in the art will understand that the principles provided herein may be implemented in any type of suitably arranged device or system.

Typical industrial sites have thousands of field devices (such as transmitters, control output devices for valves, and the like), which are part of the instrumentation and control equipment at a site. Many facilities have remote areas such as tank farms, water and waste treatment sites, wellheads, remote platforms, pipelines, and the like that are difficult and/or dangerous to access or even stand near. Devices can be located on, near, and/or inside these difficult and/or dangerous locations to perform tasks, take measurements, provide data, and the like.

Devices located in these difficult and/or dangerous to access locations can require maintenance as part of regular plant maintenance. Accordingly, these devices may need to be tracked and maintained on a regular basis. User interactions through a wired handheld device can be used to connect with field instruments to configure, troubleshoot, and maintain the device. These handheld devices used to connect with industrial field instruments may neglect the use of voice as an additional interaction for both inputting data and receiving data. The concepts disclosed herein integrate voice interaction with field devices (such as transmitters, control valves, analyzers, and the like). For example, a voice recognition engine and speech synthesizer can be utilized to communicate verbally with a field instrumentation platform. In an embodiment, in addition to or as an alternative to voice communication, the system can also use video (including high definition and 3D technologies) and short messages (such as SMS, MMS, or the like), gestures, touch inputs, eye-contact, heat, or the like to communicate between devices and with field instruments. Thus, for example, in subzero temperatures (such as along the Alaskan Pipeline) users of handheld devices can communicate with field instruments and other users while constrained with heavy clothing including thick gloves and heavy gear.

FIGURE 1 illustrates an example industrial control and automation system 100 according to this disclosure. As shown in FIGURE 1, the system 100 includes various components that facilitate production or processing of at least one product or other material. For instance, the system 100 can be used to facilitate control over components in one or multiple industrial plants. Each plant represents one or more processing facilities (or one or more portions thereof), such as one or more manufacturing facilities for producing at least one product or other material. In general, each plant may implement one or more industrial processes and can individually or collectively be referred to as a process system. A process system generally represents any system or portion thereof configured to process one or more products or other materials in some manner. For example, process systems can include tank farms, water and waste treatment facilities, wells and wellheads, remote platforms, pipelines, processes system including remote areas or hazardous areas, and the like.

In FIGURE 1, the system 100 includes one or more field instruments 103a-103b, a network 108, and a communication terminal 109. The network 108 communicatively links each of the field instruments 103a-103b to each other as well as the communication terminal 109. For example, the field instrument 103a can transmit a signal to the communication terminal 109 and the field instrument 103b via the network 108. In another example, the communication terminal 109 can transmit a signal only to the field instrument 103a or to both the field instrument 103a and the field instrument 103b via the network 108.

The network 108 can represent any suitable network or combination of networks. As particular examples, the network 108 can represent at least one Ethernet network, electrical signal network (such as a HART or FOUNDATION FIELDBUS network), or any other or additional type(s) of network(s).

The communication terminal 109 includes a wired connection 111. The wired connection 111 permits wired communication between a handheld device 110a and the communication terminal 109 in order to facilitate two-way verbal communication via the network 108 between the handheld device 110a and one or more of the field instruments 103a-103b. The handheld devices 110a-110c can transmit and receive voice communication to and from the field instruments 103a-103b. The handheld devices 110a-110c can also transmit and receive their location information and the location information of the communication terminal 109. The handheld devices 110a-110c can further transmit identification information to the communication terminal 109 and receive notifications from the communication terminal 109.

The communication terminal 109 can be located for wired remote access to one or more field instruments 103a-103b. For example, a field instrument 103a can be located in a steel mill located within close proximity to molten steel. Due to the hazardous temperatures of the molten steel, a field engineer cannot directly access the field instrument 103a. The communication terminal 109 can be positioned a distance away from the field instrument 103a so that a field engineer can obtain information from or provide commands to the field instrument 103a without being harmed.

In another example, a field instrument 103a can be located inside a water treatment tank that is not accessible from the outside. Because the inside of the water treatment tank is not accessible from the outside, a field engineer cannot directly access the field instrument 103a. The communication terminal 109 can be positioned outside of the water treatment tank so that a field engineer can obtain information from or provide commands to the field instrument 103a inside the water treatment tank even though the field instrument 103a is not accessible.

The communication terminal 109 also includes an antenna 107c. The antenna 107c permits the transmission of signals between field instruments 103a-103b and the handheld device, such as handheld devices 110b-110c. The field instruments 103a-103b use the antenna 107c to identify which of the handheld devices 110b-110c are closest to the communication terminal 109, for example, to provide immediate repair to the field instrument 103a. Through the antenna 107, the field instrument 103a can transmits a signal to a plurality of handheld devices asking for the current locations of the handheld devices.

Each of the handheld devices 110b-110c can provide location coordinates to the field device 103a via the antenna 107c identifying their respective locations. The field instrument 103a can then identify a handheld device that is closest to the communication terminal 109 and, for example, provide an indication to provide maintenance or repair to the field instrument 103a-103b. In an embodiment, the field instrument 103a provides information to the closest handheld device indicating how a field engineer associated with the handheld device can reach the communication terminal 109 to provide the maintenance or repair for the field instrument 103a-103b.

The field instrument can also use the antenna 107c to identify particular handheld device(s). For example, a particular field engineer may maintain a field instrument 103a and the field engineer's handheld device 110a may have an identifier associated with the particular field engineer. The field instrument 103a via the antenna 107c of the communication terminal 109 can send an identification request signal to a plurality of handheld devices to receive an identifier identifying the handheld device associated with the particular field engineer. The field instrument 103a can provide a maintenance reminder to the handheld device associated with the particular field engineer via the antenna 107c of the communication terminal 109 based on the received identifier. The field instrument 103a can provide a maintenance reminder to handheld device via push or pull transmission.

As discussed herein, the system 100 includes one or more field instruments 103a-103b. The field instruments 103a-103b perform any of a wide variety of functions in a process system. Field instruments 103a-103b can include transmitters, control valves, process analyzers, and the like. The field instruments 103a-103b (hereinafter field instruments 103) include one or more sensors 102a-102b and one or more actuators 104a-104b. The sensors 102a-102b and actuators 104a-104b (hereinafter sensors 102 and actuators 104) execute the functions of field instruments 103 and a processing system. For example, the sensors 102 measure one or more characteristics of a wide variety of characteristics in the field instruments 103 and the process system, such as temperature, pressure, flow rate, displacement, deflection, and the like. Each of the sensors 102 includes any suitable structure for measuring one or more characteristics in a field instrument 103 and a process system. The actuators 104 also alter one or more characteristics of a wide variety of characteristics in the field instrument 103 and the process system. Each of the actuators 104 includes any suitable structure for operating on or affecting one or more conditions in a field instrument 103 and a process system.

At least one network 105a couples the sensors 102a and actuators 104a in the field instrument 103a. At least one network 105b also couples the sensors 102b and actuators 104b in the field instrument 103a. The networks 105a-105b facilitate interaction with the sensors 102 and actuators 104. For example, the network 105a transports measurement data from the sensors 102a and provides control signals to the actuators 104a. Each network 105a-105b can represent any suitable network or combination of networks. As particular examples, the networks 105a-105b can represent at least one Ethernet network, electrical signal network (such as a HART or FOUNDATION FIELDBUS network), pneumatic control signal network, or any other or additional type(s) of network(s).

The field instruments 103 include various controllers 106a-106b, respectively. Each controller 106a-106b is coupled directly or indirectly to the respective network 105a-105b. Each controller 106a-106b controls parameters in the system 100 to perform various functions. For example, a first set of controllers 106a can use measurements from one or more sensors 102a to control the operation of one or more actuators 104a. A second set of controllers 106a can optimize the control logic or other operations performed by the first set of controllers. A third set of controllers 106a can perform additional functions.

In an embodiment, each field instrument 103-103b has a single senor 102 or a single actuator 104. In at least this case, a controller 106 can be separate from the field instruments 103a-103b. The voice engine 101 can also be a separate from the field instruments 103. The controller 106 can be associated with a voice engine 101 but also separate from the voice engine 101. As such, a controller 106 and a voice engine 101 can communicate with one or more field instruments 103. In an embodiment, the controller 106 and the voice engine 101 can be a single separate component from the field instrument 103.

Controllers 106a-106b (hereinafter controllers 106) are often arranged hierarchically in a system. For example, different controllers 106 could be used to control individual actuators and collections of actuators forming the field instruments 103, collections of field instruments 103 forming units, collections of units forming plants, and collections of plants forming an enterprise. A particular example of a hierarchical arrangement of controllers 106 is defined as the "Purdue" model of process control. The controllers 106 in different hierarchical levels can communicate via one or more networks 108 and associated switches, firewalls, and other components.

Each of the controllers 106 includes any suitable structure for controlling one or more aspects of a field instrument 103. At least some of the controllers 106 could, for example, represent multivariable controllers, such as Robust Multivariable Predictive Control Technology (RMPCT) controllers or other type of controllers implementing model predictive control (MPC) or other advanced predictive control (APC).

The field instruments 103a-103b also include voice engines 101a-101b, respectively. The voice engines 101a-101b are coupled between the controllers 106 and the network 108. Each voice engine 101a-101b integrates a voice recognition engine and a speech synthesizer into a field instrument platform. In other words, the voice engine 101a-101b transforms electrical control signals and electrical sensor measurement signals into audible data communication signals for audible communication. The voice engine 101a-101b also transforms audible command information (such as voice commands) into electrical signal commands for the controllers 106. Accordingly, the voice engine 101a-101b provides two-way voice communication between a field instrument 103 and a handheld device 110a-101c.

For example, after a field engineer approaches a communication terminal 109, a handheld device 110a (or also 110b or 110c) connects to the communication terminal 109 via the wired connection 111. The handheld device 110a can receive verbal commands and transmit those verbal commands to the voice engine 101a-101b to request information of a field instrument 103a-103b from the controllers 106a-106b. Verbally provided information concerning a field instrument 103a-103b can include status information, configuration information, commissioning information, query results, field instrument diagnostics, current and past field instrument notifications, current and past field instrument modes, current and past field instrument statuses, current and past process system characteristics measured by one or more sensors of the field instrument, current and past field instrument characteristics measured by one or more sensors of the field instrument, current and past positions of one or more actuators of the field instrument, and the like. After identifying the verbal commands and obtaining the requested information of the field instrument 103a-103b, the controllers 106a-106b, using the voice engine 101a-101b, provide output signals in an audio format to the handheld device 110a to verbally provide the request information of the field instrument 103a-103b.

Each handheld device 110a-110c can also receive verbal commands and transmit those verbal commands to the voice engine 101a-101b to perform a field instrument action. Field instrument actions can include moving one or more actuators, adjusting one or more sets points of the field instrument 103a-103b or the process system, arranging a hierarchy of controllers 106a-106b, reconfiguring one or more controllers 106a-106b, changing a mode of the field instrument 103a-103b, implementing trouble shooting operations, and the like. After initiating the performance of a field instrument action, the field instrument 103a-103b, using the voice engine 101a-101b, provides a speech output notification through the handheld device 110a identifying an action status. Action statuses can include a not responding status, an in progress or a percent complete status, a complete status, and the like.

In addition, one or more databases 120a-120b are coupled to the voice engines 101a-101b, respectively. Each database 120a-120b stores queries for process information via voice commands and stores synthesized speech responses. For example, each database 120a-120b stores pre-recorded audio as well as a text-to-speech system. Each database 120a-120b can store particular process information and synthesize speech responses for a particular field instrument 103a-103b.

Each database 120a-120b stores specific information so that a voice engine 101a-101b enters an active state from an inactive state in response to an activation command and enters an inactive state from an active state in response to a deactivation command. In an embodiment, the activation command and the deactivation command can be numeric passwords received by the handheld device 110a and transmitted to the voice engine 101a-101b. The voice engine 101a-101b can also enter the inactive state after remaining in the active state for a predetermined amount of time without receiving a voice command.

In an embodiment, the activation command can be an activation voice command and the deactivation command can be a deactivation voice command. For example, a voice engine 101a-101b enters an active state from an inactive state only in response to receiving a specific activation voice command. A voice engine 101a-101b can also enter an inactive state from an active state only in response to receiving a specific deactivation voice command. A voice engine 101a-101b can be in a deactivated state during normal operation of the field instrument 103a-103b. When the voice engine 101a-101b is in the deactivated state, the voice engine can remain in a listening mode in order to receive an activation voice command.

For example, after a handheld device 110a connects to the wired connection 111, the field engineer may be gathering tools while discussing potential issues of a particular field instrument 103a-103b with another field engineer. Because the voice engine 101a-101b has not received the particular activation voice command to enter an active state, the field engineer can freely discuss aspects of the field instrument 103a-103b with another field engineer in proximity to the handheld device 110a without accidentally providing a voice command that would initiate a request for information or an action by the field instrument 103a-103b.

Subsequently, the handheld device 110a can receive the activation voice command and transmit the activation voice command to the voice engine 101a-101b so that voice engine 101a-101b can enter an active state. Once the voice engine 101a-101b enters the active state, the voice engine 101a-101b can provide an indication that it is in the active state via the handheld device 110a. In an embodiment, each voice engine 101a-101b enters an active state in response to different activation commands and activation voice commands, and each voice engine 101a-101b enters an inactive state in response to different deactivation commands and deactivation voice commands.

Furthermore, after the field engineer has completed giving voice commands to the voice engine 101a-101b, the field engineer can give a deactivation voice command to deactivate the voice engine 101a-101b so that the field engineer can once again freely discuss the field instrument 103a-103b with another field engineer without accidentally commanding the field instrument 103a-103b through speech. After receiving the deactivation voice command, the voice engine 101a-101b can remain in the listening mode.

Each database 120a-120b also stores specific information based on the type of field instrument 103a-103b. Accordingly, a voice engine 101a-101b transforms only particular voice commands into electrical signal commands for the controllers 106a-106b due to the field instrument type. Each database 120a-120b stores queries for process information via voice commands and synthesized speech responses depending on the type of field instrument 103a-103b.

For example, each field instrument 103a-103b can include a valve. The database 120a-120b stores queries for process information via voice commands and synthesized speech responses (such as pre-recorded audio) associated with a valve. A handheld device 110a connected to a communication terminal 109 can receive a voice command and transmit the voice command via the communication terminal 109 to the voice engine 101a-101b of the field instrument 103a-103b. The voice command can be a command instructing the valve to close completely. Because the database 120a-120b stores information pertinent to the valve, the voice engine 101a-101b can access the database 120a-120b and retrieve data that will allow the voice engine 101a-101b to convert the voice command to an electric signal configured for the controllers 106a-106b. The voice engine 101a-101b transmits the electrical signal commanding a controller 106a-106b to close the valve completely.

Subsequently, once the valve completely closes, the voice engine 101a-101b receives another electrical signal from a controller 106a-106b indicating that the valve is completely closed. The voice engine 101a-101b accesses the database 120a-120b and retrieves a particular synthesized speech response associated with identifying that a valve is completely closed. The voice engine 101a-101b can transmit the synthesized speech response to the handheld device 110a so that handheld device 110a can provide an audible indication (such as speech) that the valve is completely closed.

In another example, a field instrument 103a-103b can include a flow meter. The database 120a-120b stores queries for process information via voice commands and synthesized speech responses (such as pre-recorded audio) associated with a flow meter. A handheld device 110a connected to a communication terminal 109 can receive a voice command and transmit the voice command via the communication terminal 109 to the voice engine 101a-101b of the field instrument 103a-103b. The voice command can be a command requesting a current fluid flow rate recorded by the flow meter. Because the database 120a-120b stores information pertinent to the flow meter, the voice engine 101a-101b can access the database 120a-120b and retrieve data that will allow the voice engine 101a-101b to convert the voice command to an electric signal. The voice engine 101a-101b transmits the electrical signal commanding a controller 106a-106b to report a current fluid flow rate measured by the flow meter.

Subsequently, once the controller 106a-106b identifies the current fluid flow rate measured by the flow meter, the voice engine 101a-101b receives another electrical from a controller 106a-106b indicating the current fluid flow rate. The voice engine 101a-101b accesses the database 120a-120b and retrieves a particular synthesized speech response associated with the value and units of the current fluid flow rate. The voice engine 101a-101b transmits the synthesized speech response to the handheld device 110a so that handheld device 110a can provide an audible indication (such as speech) of the value and units of the fluid flow rate measured by the flow meter.

In an embodiment, the handheld devices 110a-110c can communicate with each other and one or more field instruments 103a-103b via multiple access points. For example, as discussed herein, a handheld device 110a can link to one or more field instruments 103a-103b via a wired connection 111 and a communication terminal 109.

The handheld devices 110a-110c can also directly communicate with the each field instrument 103a-103b using the access points or antenna 107a-107b. The direct connection can use a near-field communication, such as Zigbee, Bluetooth, or the like. For example, a user with a handheld device 110a can be walking through a power plant. When the handheld device 110a crosses a perimeter that is for example a distance from a particular field instrument 103a (or 103b), a wireless connection via the antenna 107a (or 107b) connects the handheld device to the field instrument inside the perimeter for communication. The field instrument 103a can also provide a maintenance schedule, a malfunction report, or the like when a handheld device 110a moves within the perimeter. Additionally, perimeters can also be located around a communication terminal 109 or a plurality of field instruments 103a-103b and initiate a communication with a handheld device 110a-110c when the handheld device moves from outside the perimeter to inside the perimeter.

Furthermore, while a handheld device 110a-110c directly connects with a field instrument 103a-103b, the handheld device 110a-110c can communicate with one or more other handheld devices 110a-110c. For example, if two handheld devices 110a-110c are connected to the same field instrument 103a-103b, the handheld devices can communicate with each other through the voice engine of the field instrument. The handheld device 110a-110c can also communicate with one or more other handheld device 110a-110c connected to other access points such a server 150 or a communication terminal 109. The handheld device 110a-110c can also communicate with each using near-field communication, a cellular network, or the like.

The handheld device 110a-110c can also communicate with one or more field instruments 103a-103b via a server 150 in a wireless communication system. For example, a handheld device 110a can wirelessly connect to base station that provides a wireless connection to a server 150. The server 150 can allow the handheld device 110a-110c to communicate with one or more field instruments 103a-103b as well as other handheld device 110a-110c connected via another access point. Furthermore, a handheld device 110b can communicate with one or more field instruments 103a-103b as well as other handheld devices (or stationary terminals) via wireless communication using the antenna 107c of the communication terminal 109. In an embodiment, one or more handheld devices 110a-110c can communicate wirelessly with one or more field instruments 103a-103b via the communication terminal 109.

Although FIGURE 1 illustrates that each of the field instruments 103a-103b includes a voice engine 101a-101b, alternatively or additionally, the communication terminal 109 or the server 150 can include a voice engine 101a-101b. For example, some field instruments may not have a voice engine, but a handheld device 110a-110c can still communicate using voice communication with those field instruments via the server 150 or the communication terminal 109 if at least one of the server 150 or the communication terminal 109 includes a voice engine 101a-101b. In this case, the voice engine with the communication terminal 109 or the server 150 can also include one or more data stores for voice commands or the like as discussed herein.

In an embodiment, if two or more handheld devices 110a-110c (or a handheld device 110a-110c and a stationary terminal) are utilizing voice communication with one or more field instruments 103a-103b, each of the devices can also communicate with each other. For example, a handheld device 110c can facilitate voice communication with one or more of the field instruments 103a-103b and simultaneously can facilitate voice communication with handheld device 110a and/or a stationary terminal. Furthermore, while the handheld device 110c facilitates voice communication with handheld device 110a and/or a stationary terminal, at least one of the handheld device 110a and/or the stationary terminal can facilitate voice communication with one or more field instruments 103a-103b.

Although FIGURE 1 illustrates one example of an industrial control and automation system 100, various changes can be made to FIGURE 1. For example, industrial control and automation systems come in a wide variety of configurations. The system 100 shown in FIGURE 1 is meant to illustrate one example operational environment in which voice augmentation can be incorporated into or used with operator consoles. FIGURE 1 does not limit this disclosure to any particular configuration or operational environment.

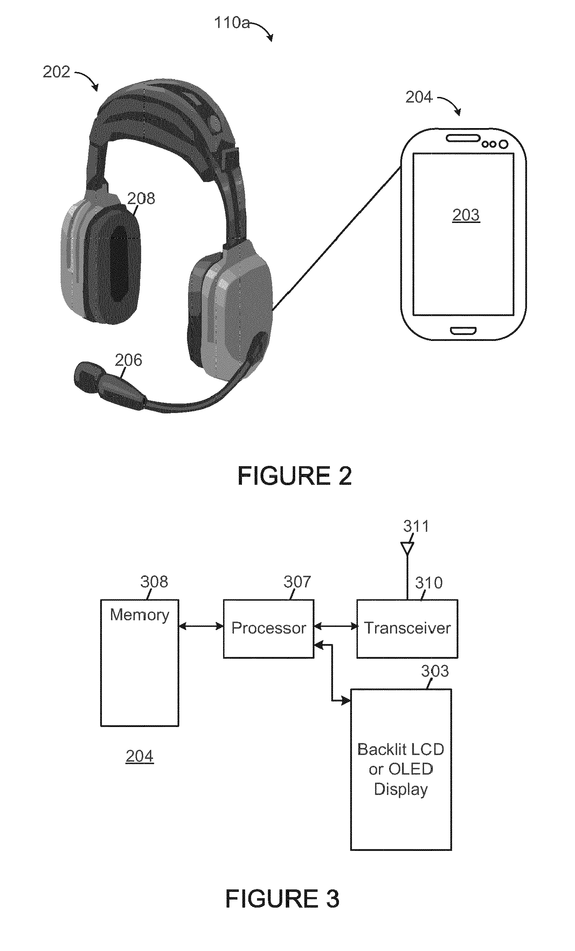

FIGURE 2 illustrates an example handheld device 110a according to this disclosure. The handheld device 110a includes a headset 202 and handset 204. The headset 202 includes one or more microphones 206 and one or more speakers 208 such as a set of headphones. The headset 202 can also include a headrest and one or more antenna. The microphone 206 receives speech or sound and transmits the received speech and sound to the handset 204. The speakers 208 receive an audio transmission from the handset 204 and output the audio transmission in the form of speech or sound. In an embodiment, the speakers 208 can also include noise cancelation. The handset 204 connects with the communication unit 109 via the wired connection 111 illustrated in FIGURE 1. The handset 204 can also include a user input device and output device (such as the display 203) to send and receive additional non-auditory information of one or more field instruments 103a-103b while simultaneously carrying out two-way speech communication between the headset 202 and a field instrument 103a-103b. With the use of a handheld device 110a including a handset 204 and a headset 202 having one or more microphones 206 and one or more headphones 208, a field engineer can maintain situational awareness while in the field servicing field instruments 103a-103b.

Although FIGURE 2 illustrates one example of a handheld device 110a, various changes may be made to FIGURE 2. For example, all or portions of FIGURE 2 may represent or be included in other handheld devices, such as handheld devices 110b-110c. Also, the functional division shown in FIGURE 2 is for illustration only. Various components could be combined, subdivided, or omitted and additional components could be added according to particular needs.

FIGURE 3 illustrates an example handset device 204 according to this disclosure. The handset 204 in this example represents a handset particularly configured to service field instruments 103a-103b. In an embodiment, the handset 204 can be cellular device including one or more applications or programs for servicing field instruments 103a-103b. A display 303 (such as the display 203 of FIGURE 2) could include a backlit LCD or OLED display. A processor 307 coupled to the display 303 can control content that is presented on the display 303. The processor 307 and other components within the user device 204 can be powered by a battery or other power source that can be recharged by an external power source or can be powered by an external power source. A memory 308 coupled to the processor 307 can store applications or programs for execution by the processor 307 and presentation on the display 303. The handset 204 can also include a transceiver 310 connected to an antenna 311. The transceiver 310 can receive wireless signals from the communication unit 109 and can also be connected to the communication unit 109 via the wired connection 111 illustrated in FIGURE 1. As discussed herein, the handset 204 connected to a communication unit 109 is used for two-way speech communication between the headset 202 and a voice engine 101a-101b.

Although FIGURE 3 illustrates one example of a handset device 204, various changes may be made to FIGURE 3. For example, the functional division shown in FIGURE 3 is for illustration only. Various components could be combined, subdivided, or omitted and additional components could be added according to particular needs.

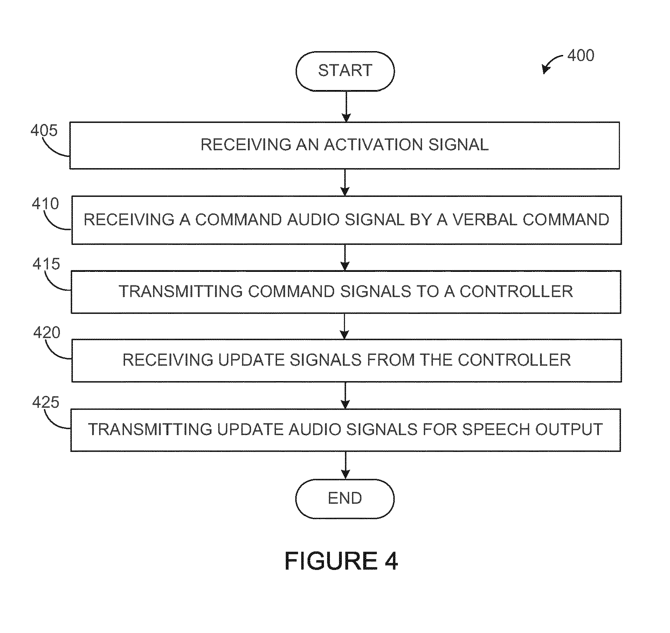

FIGURE 4 illustrates an example method 400 in a voice engine of a field instrument (such as the voice engine 101a-101b) in an industrial control and automation system according to this disclose. The method 400 is used for executing two-way sound (such as voice or verbal) communication between a field instrument 103a-103b and a handheld device 110a. The method 400 could also be used for any other suitable purpose in any other suitable system.

As shown in FIGURE 4, a voice engine 101a-101b receives an activation signal in order for the voice engine to configure command audio signals into one or more command signals recognizable by a controller at step 405. The activation signal allows the voice engine 101a-101b to enter an active state from an inactive state. The voice engine 101a-101b receives a command audio signal generated by a verbal command at step 410. The command audio signal includes one or more instructions. The command signal can be received from a microphone. The voice engine 101a-101b further transmits one or more command signals to a controller to implement the one or more instructions at step 415. At step 420, the voice engine 101a-101b receives one or more update signals from the controller. The one or more update signals are based on at least one of a parameter measured by one or more sensors or a status of one or more actuators. At step 425, the voice engine 101a-101b transmits the one or more update audio signals for speech output. The one or more update audio signals are broadcasted in a speech format via one or more speakers or a set of headphones.

Although FIGURE 4 illustrates one example of a method 400 in a voice engine of a field instrument in an industrial control and automation system, various changes may be made to FIGURE 4. For example, while shown as a series of steps, various steps in FIGURE 4 could overlap, occur in parallel, occur in a different order, or occur any number of times. Also, FIGURE 4 is meant to illustrate one way in which voice augmentation can be used at a handheld device 110a. However, as noted above, there are many other ways in which two-way sound (such as voice or verbal) communication between a field instrument 103a-103b and a handheld device 110a can be implemented.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
receiving (410) a command audio signal generated by a verbal command, wherein the command audio signal includes one or more instructions;
transmitting (415) one or more command signals to a controller (106) to implement the one or more instructions;
receiving (420) one or more update signals from the controller, wherein the one or more update signals are based on at least one of a parameter measured by one or more sensors (102) or a status of one or more actuators (104); and
transmitting (425) the one or more update signals for speech output.

2. The method of Claim 1, further comprising after receiving the command audio signal, configuring the command audio signal into the one or more command signals in order to transmit the one or more instructions to the controller, wherein the one or more command signals are recognizable by the controller.

3. The method of Claim 1, further comprising after receiving the one or more update signals, configuring the one or more update signals into one or more update audio signals.

4. The method of Claim 1, further comprising:
receiving (405) an activation signal before receiving the command audio signal in order to configure the command audio signal into the one or more command signals recognizable by the controller.

5. The method of Claim 1, wherein transmitting the one or more command signals to the controller comprises requesting status information of the one or more sensors or a command action by the one or more actuators.

6. The method of Claim 2, wherein configuring the command audio signal into one or more command signals recognizable by the controller comprises configuring audio request information of a field instrument (103a, 103b) into a request information signal recognizable by the controller.

7. The method of Claim 2, wherein configuring the command audio signal into one or more command signals recognizable by the controller comprises configuring an audio field instrument action command into a field instrument action command signal recognizable by the controller.

8. A device comprising:
a voice engine (101) configured to:
receive a command audio signal generated by a verbal command, wherein the command audio signal includes one or more instructions,
transmit one or more command signals to a controller (106) to implement one or more instructions,
receive one or more update signals from the controller, wherein the one or more update signals are based on at least one of a parameter measured by one or more sensors (102) or a status of one or more actuators (104), and
transmit the one or more update signals for speech output.

9. The device of Claim 8, wherein the voice engine is configured to receive the command audio signal and transmit the one or more update signals via one or more access points (107) to one or more terminals (110), wherein the one or more access points utilize at least one of a direct wireless communication channel between the voice engine and a terminal (110), a wired communication channel between the voice engine and a terminal (110), a wireless communication between a terminal (110) and network (108) linking two or more voice engines (101), or a server (150) for communication between the voice engine and a terminal (110).

10. The device of Claim 8, further comprising a storage device (120) configured to:
store one or more queries used to associate the command audio signal with the one or more command signals, and
store one or more queries used to associate the one or more update signals with the one or more update audio signals.

11. The device of Claim 8, wherein the voice engine is configured to facilitate voice communication with a handheld device (110) when the handheld device moves within a perimeter around the voice engine.

12. The device of Claim 9, wherein a first handheld device (110) is configured to communicate with the voice engine via the direct wireless communication channel, a second handheld device (110) is configured to communicate with the voice engine via the server, and a third handheld device (110) is configured to communicate with the voice engine via the wired communication while each of the first handheld device, the second handheld device, and the third handheld device are simultaneously communicating with each other.

13. The device of Claim 10, wherein the one or more queries stored in the storage unit are based on the type of device (103a, 103b).

14. The device of Claim 8, wherein the one or more update audio signals comprise information related to a status of a sensor.
